# EUROPEAN PATENT SPECIFICATION

(11) **EP 1 648 217 B1**
(45) Date of publication and mention of the grant of the patent: **01.05.2013**
(21) Application number: 04769103.5
(22) Date of filing: 30.07.2004
(51) Int. Cl.: A01F 15/07

(54) **COVERING SHEET FEEDER DEVICE FOR COVERING THE OUTER SURFACE OF AN AGRICULTURAL BALE**
ABDECKFOLIENZUFUHRVORRICHTUNG ZUR ABDECKUNG DER AUSSENFLÄCHE EINES LANDWIRTSCHAFTLICHEN BALLENS
DISPOSITIF D'ALIMENTATION POUR L'AMENEE D'UNE FEUILLE DE COUVERTURE DESTINEE A RECOUVRIR LA FACE EXTERNE D'UNE BOTTE AGRICOLE

(30) Priority: 31.07.2003 DE 10334987; 12.01.2004 DE 102004001773
(43) Date of publication of application: 26.04.2006
(60) Divisional application: 10010427.2
(73) Proprietor: Kuhn-Geldrop B.V., 5667 KP Geldrop (NL)
(72) Inventor: LANGE, Friedrich, 29643 Neukirchen (DE); TENBULT, Eric, NL-5531 KL Bladel (NL); VAN AMSTEL, Leon, NL-6553 RW Geldrop (NL); VAN DEN WILDENBERG, Johan, NL-6021 CT Budel (NL)
(74) Representative: Raynor, Simon Mark
(86) International application number: PCT/IB2004/002452
(87) International publication number: WO 2005/009112

(56) References cited:
- EP-A- 0 432 830
- EP-A- 0 432 830
- US-A- 4 296 595
- US-A- 4 296 595
- US-A- 4 748 793
- US-A- 4 748 793
- US-A- 5 450 704
- US-A- 6 021 622
- US-A1- 2003 056 469
- US-A1- 2003 056 469

## Description

This invention relates to a feeder device for covering the outer surface of an agricultural bale with a covering sheet e.g. of plastics film or netting.

As is well known, balers of agricultural crop material (such as hay, wilted grass to form silage, or straw) are usually of cylindrical shape - so called "big bales" or "round bales", or the bales may be of rectangular cross-section. Round bales are formed in round balers, and which can be of the fixed or variable chamber type.

It is usual to apply a covering layer of netting or plastics film to the cylindrical outer surface of a round bale, after the completion of formation of the bale in the bale-forming chamber. This covering layer is required in order to maintain the cylindrical shape of the compressed mass of material in the bale.

The bale is then discharged from the baler to fall onto the ground, for subsequent handling by other agricultural equipment. For some users, it is sufficient to pick-up the bales and load them onto a trailer, and then transport the bales to a covered storage area. For other users, it is desirable to apply weather proof cylindrical covering or wrapping the full surface of the bales as to ensilage them, and it is well known to use bale wrappers, which are of the rotating turntable or orbiting satellite film dispenser reel type. Bale wrappers can be used to wrap bales of both cylindrical shape, and also of parallelopipedal shape (rectangular cross section).

The present invention is concerned with a feeder device (for covering the outer surface of an agricultural bale with a covering sheet) which is capable of being incorporated within an agricultural baler, or in a bale wrapper.

It is known from EP 0432830 to provide a round baler which picks up a crop lying on the ground, such as hay, straw or wilted grass, and which feeds the crop to a bale-forming chamber in which a round (cylindrical) bale of compressed material is formed. After completion of the formation of the bale, a sheet dispenser mechanism is operated which applies a covering layer of sheet material e.g. netting or plastic film, to the cylindrical outer surface of the bale.

The dispenser mechanism has a feed device which presents a leading end of sheet material from a supply reel, to the outer surface of the bale.

The bale- forming chamber is defined by a belt-type of "apron", and a circular array of compression and/or transport rollers, and in which a feeding gap is defined between an adjacent pair of such rollers, through which the sheet material passes, so as to come into contact with the outer surface of the bale after completion of formation of the bale.

The feeder device has a feeder mouth, through which the sheet material passes, and the feeder device pivots from a withdrawn or rest/inactive position (which it takes up while the bale is being formed), to a feeding position (which it takes up after the bale has been formed) whereby the feeding mouth can insert the leading end of the sheet material through the feeding gap and into contact with the bale.

Rotation of the bale is in one direction, and in cooperation with rotation of one of the rollers adjacent the feeding gap in an opposite direction, this causes the leading end of the sheet material to be fed in the circumferential direction of the travelling outer surface of the bale. The leading end of sheet material is therefore trapped between the outer surface of the bale and this roller, and therefore attaches itself to the outer surface of the bale and moves with it, thereby withdrawing sheet material from the supply reel which progressively covers the outer surface of the bale as it continues its rotation. This is allowed to continue until such time as a required number of windings of cover layer have been applied to the outer surface of the bale.

The feeder mechanism is then returned to its rest position, and a cutting mechanism is operated, in order to cut the sheet material at a position intermediate the feeder mouth (in its now withdrawn position) and the outer surface of the bale, thereby leaving a new leading end or "tail" of sheet material projecting from the feeder mouth. This new leading end is firmly held by clamping devices incorporated in the feeder mouth, ready for a renewed cycle of bale-covering after discharge of the covered bale, and subsequent formation of a new bale.

Clearly, it is necessary for the sheet material to be firmly gripped, while the feeder device is in its withdrawn position and a new bale is being formed, so that the new leading end does not become entangled with other working components, but is ready for presentation to the outer surface of a newly formed bale.

The gripping of the sheet material must therefore be sufficiently strong to hold the sheet material during inaction of the feeder device (when a new bale is being formed), and during transportation of the film/net end from the inactive position to the feeding position, but be absent to prevent easy withdrawal of the sheet material from the supply reel (by rotation of the bale) after the leading end has been moved by the feeder mouth through the feeding gap and into contact with the outer surface of the bale.

In this known arrangement, the feeder mouth for the sheet material is formed effectively by a pair of cooperating clamping members which define a guide path between them through which the sheet material can pass, and these clamping members apply a sufficient clamping force to opposed sides of the sheet material in order to hold the sheet material and allow a small length or "tail" to project forwardly and hang freely from the feeder mouth.

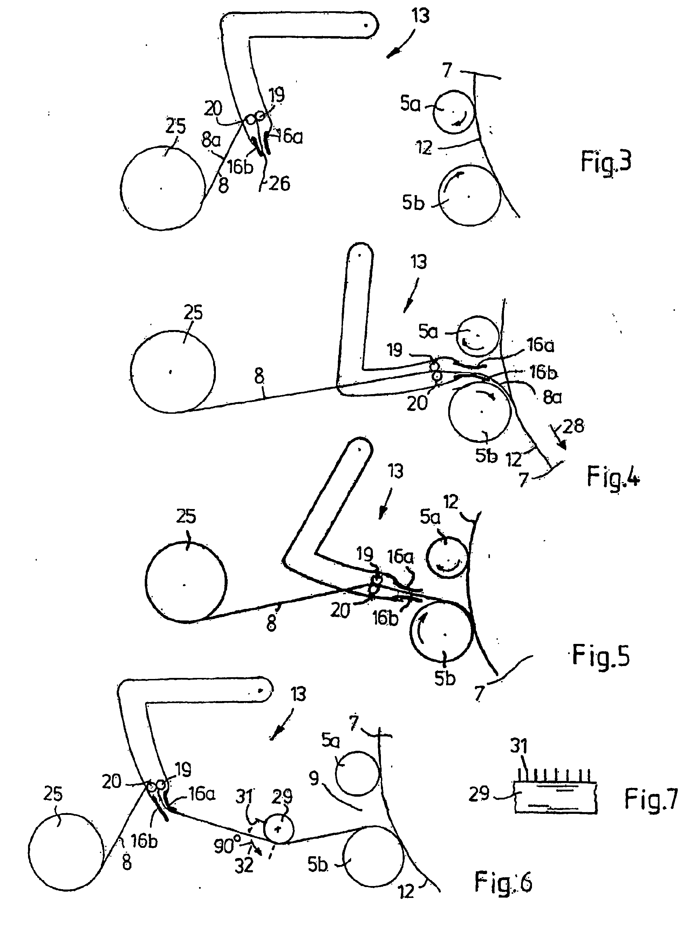

The clamping members therefore have specially formed engaging surfaces, one of which is formed with circular cut-outs along its leading edge, and the other of which has saw tooth projections along its leading edge (see Figures 5 and 6). These engaging surfaces are designed so as to fulfil the required dual function of: a) securely holding the leading end of sheet material while a new bale is being formed and b) allowing the sheet material to be withdrawn from the supply reel and to move over the engaging surfaces of the clamping members, when the fully formed bale rotates in order to pull successive windings of sheet material onto its outer surface.

However, in practical operation of the known feeder device, problems can arise, in that the supply reel may apply excessive tension to the sheet material, when the leading end of the sheet is intended to be securely held by the engaging surfaces, such that the circular cut-outs may not be able to exert a sufficient clamping force, with the result that the sheet material becomes disengaged from the feeder mouth, and hangs loosely, and is therefore liable to become entangled with other pieces of moving machinery. When this occurs, this requires the operation of the baler to be stopped, and for manual intervention in order to set up the feeder device again ready for a new cycle of operation.

This problem is further aggravated when, as is often the case, a large amount of dust is present which falls onto the surface of the sheet material and therefore makes it more slippy and more likely to become disengaged from its intended holding or clamping engagement between the engaging surfaces of the clamping member.

There is also the risk that the surface of the sheet material may be damaged by its engagement with the special formations on the leading edges of the engaging surfaces, which is clearly undesirable as the sheet material may then form unsatisfactory covering layers on the surface of the bale.

Further the grip of the clamping device known from prior art is too low to pull the film/net from the reel when moving from the inactive position to the feeding position. A feeder device capable of solving some of these problems is known from US 4 296 595, however this device is not able to automatically start the wrapping of the bale.

The present invention therefore seeks to provide an improved feeder device which is better able to hold the sheet material securely in the feeder mouth when the device is inactive and when it is moved from the inactive position to the feeding position, to engage more securely the leading end of the film/net with the bale, and to apply the film/net in a nice way over the full width or the edges and particularly when the feeder device is incorporated in a baler, and more preferably a round baler.

It should be understood, however, that a feeder device according to the invention may be incorporated within other types of bale handling apparatus, such as rotating turntable or orbiting satellite type bale wrapper. Further, the feeder device of the invention may be supplied as original equipment in new balers and bale-wrappers, or may be retrofitted to existing balers and bale wrappers.

According to the invention there is provided a feeder device as defined in claim 1. Preferred features of the invention are set out in dependent claims 2 to 28.

It is also known from WO/0176353, to provide an orbiting satellite type of bale wrapper, for applying stretched plastics film to cover the surface of a cylindrical bale, The apparatus has a film dispenser which takes up one operating position in order to dispense plastics film which covers the cylindrical outer surface of the bale. The dispenser is then adjusted to an alternative wrapping position, in which the axis of rotation of the reel of film is turned from an upright position to a substantially horizontal position. In this alternative wrapping position, as the bale is rotated, the plastics film is withdrawn from the reel and is caused to bend over the circular edge of the bale and then to overlie the circular end faces of the bale.

In one preferred development of the invention, the feeder device of the invention may be modified so as to be added to the dispenser device of the type disclosed in WO/0176353. A disadvantage of the known wrapper apparatus is that the film can break during application of the film. An automatic re-start could be done by entering the cut film to the area where the bale is rotating on the horizontal support rollers (when in the cylindrical surface wrapping mode). Another advantage could be that the conventional film cutters and holders could be abandoned, while also the first start of the wrapping could be done.

In a further preferred development of the invention, the feeder device of the invention may be applied to the wrapper apparatus of the type disclosed in WO/0176353 as an additional component. One disadvantage of the known wrapper apparatus is that the dispenser needs to be turned between its two different wrapping positions. This is time consuming, and the film needed for this conventional wrapping is not sufficient for covering, with one strip of film, the entire width of the bale, so extra revolutions of the bale are needed, which takes more time.

As an alternative to the cylindrical wrapping of the known apparatus, a feeder device according to the invention could be added to a conventional wrapper apparatus, both of the rotating turntable type, and also the orbiting satellite type. The wrapping of the cylindrical surface could be applied simultaneously with the conventional wrapping, to provide additional wrapping capability per operating cycle. The cylindrical wrapping by the additional device (the modified feed device according to the preferred embodiment) could be applied prior to, or after a conventional wrapping. The cylindrical strips preferably are as wide, or even wider than the width of the bale, so that it can stretch over the vulnerable circular edges or corners of the bale. This is also an advantage for the application of a feeder device according to the invention in a baler.

In a feeder device according to claim 1, a pair of rollers is provided within the feeder mouth, and preferably comprises at least one freewheeling roller and at least one compression roller. The freewheeling roller may be rotatable freely, when the sheet is being grasped and pulled on to the surface of the rotating bale, while it is blocked against rotation in an opposition direction, even when the sheet is being withdrawn from the supply reel.

Such a gripping action between the two rollers is safe, and the sheet [film] cannot be drawn back through the feeder mouth by accident and back on to the reel.

When, as is preferred, the compression roller is spring-pressed towards the freewheeling roller, the action of the spring enhances the gripping pressure on the sheet and enhances security against unintentional withdrawal of the sheet through the feeding mouth and in the direction towards the supply reel.

In a preferred embodiment, the feeding mouth has two rubber lips, and the sheet is laid between them so that, in the direction of rotation of the bale, the lips are situated such that in the feeding position they are laid close to the bale surface whereby, under pulling effect and tightening effect applied by the surface of the bale to the sheet, the lip bends elastically away. Therefore, the free end of the sheet is brought together closely into intimate contact with the material on the outer surface of the bale and or the roller 5a/b whereby adhesion of the sheet to the outer surface will generally be trouble free. Rubber lips are preferred, but any other resiliently deformable material may be used, which permits elastic bending of the lip or lips to engage with the outer surface of the bale and guide the feeding of the sheet on to the surface of the bale.

The sheet is preferably formed by a reel of plastics film, and the surfaces of the rubber lips facing the film may have a coarse texture, to prevent adhesion to the film.

As a further development of this concept, the surface on the film facing side of the rubber lip may be napped, perforated, or provided with a silicone layer, to prevent adhesion to the film.

It is further preferred that, in the path of the feeding device between a parking position and the feeding position, there may be provided a cutting rotor that, over the full width is provided with cutting parts, and the cutting rotor is rotated, at the end of the wrapping cycle, and the film is then cut off. It is advantageous to minimise any shifting of the free end of the film.

The cutting parts of the rotor may comprise pins.

The feeding device, with its feeding mouth, preferably is moveable along an arc from its inoperative position to its feeding position.

The feeding device also is preferably covered with a screen over the feeding mouth, throughout the full width between the mounting plates forming the mounting structure of the feeding device.

Preferred embodiments of the invention will now be described in detail, by way of example only, with reference to the accompanying drawings, in which:
Figure 1 is a side view illustration of a feeder device according to the invention, incorporated in a round baler, and which is capable of covering the outer surface of a round bale, after formation in a bale forming chamber of the baler, with a covering sheet e.g. of netting or plastics film, and in which a feeding mouth of the feeder device for feeding the sheet material is shown in full outline in a withdrawn or inactive/rest position, and in dashed lines in a feeding position;
Figure 2 is a cross sectional view, to an enlarged scale, showing the feeder device and its feeding mouth in more detail (in this preferred arrangement, the feeder device is pivotally mounted, but an alternative arrangement, within the scope of the invention, may allow the feeding mouth to move along a reciprocating linear path);
Figure 3 shows the feeding mouth in its withdrawn position, holding the leading end of the sheet material in its feeding mouth;
Figure 4 illustrates the feeding mouth after movement of the feeding device to the feeding position;
Figure 5 shows the feeding mouth at an intermediate stage in reverse movement from the feeding position back towards the withdrawn position;
Figure 6 shows a further intermediate stage in the withdrawal movement, in which a cutting mechanism can operate to cut the sheet material at a position intermediate the feeding mouth and the outer surface of the bale;
Figure 7 is a plan view, to an enlarged scale, showing a detail of a cutting rotor used in the cutting mechanism;
Figures 8 to 11 are schematic illustrations, of detail of further modified embodiments of feeder device according to the invention;
Figure 12 shows schematically application of a feeder device according to the invention to apply covering sheet e.g. film to the outer surface of a bale of rectangular cross section, which is supported and rotated by a set of rollers of a bale handling device shown schematically also; and
Figures 13 and 14 are side and plan view illustrations of the feeding of sheet material to cover the outer surface of a cylindrical bale.

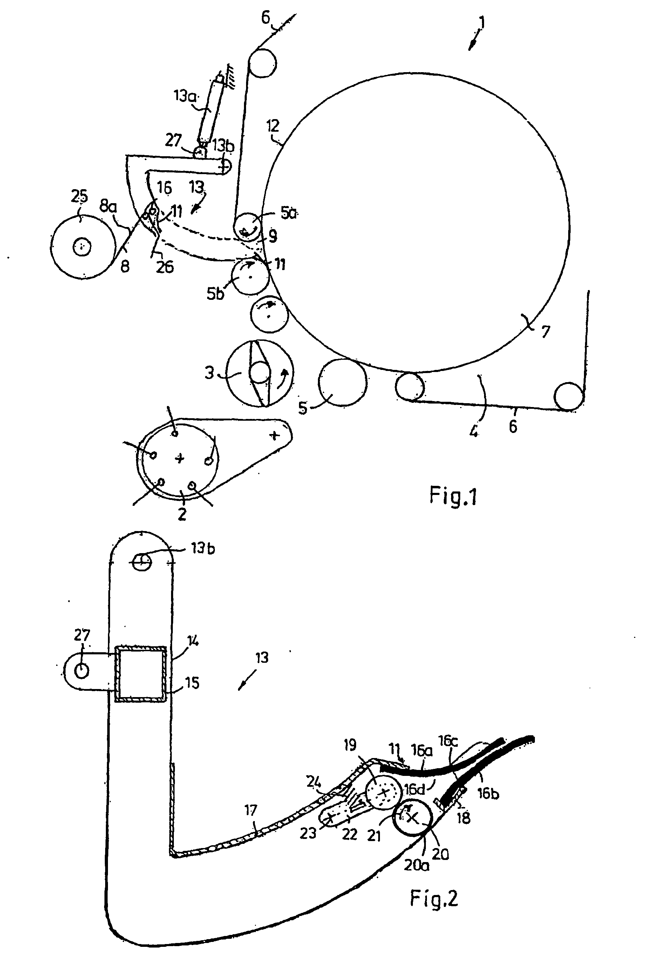

Referring first to Figures 1 to 7 of the drawings, the feeder device of the invention is shown, by way of example only, incorporated within a round baler. It should be understood, however, that a feeder device according to the invention is concerned primarily with covering the outer surface of an agricultural bale, and therefore may be incorporated in other types of agricultural equipment i.e. not necessarily only in an agricultural baler, but could also be incorporated, for example, in a bale wrapper, of the rotating turntable or orbiting satellite type in which a bale is rotated on rollers or belts.

A round baler is shown schematically by reference 1, and the construction and operation of such balers are well known to those of ordinary skill in the art, and need not be described in detail herein. The baler has a rotating tine type pick up rotor 2 which picks up cut material lying on the ground and supplies it to a cutting or chopping rotor 3. The material lying on the ground may be hay, straw, or wilted grass for use in forming silage. The chopped material is then fed by the rotor 3 to a bale-forming chamber 4, which forms and compresses the material by continuously turning and taking in the material so that a cylindrical bale of progressively increasing diameter is formed, until a big or round bale 7 of sufficient size has been formed, having a cylindrical outer surface 12. To form and compress the bale, compression/transport rollers 5 and "apron" type belts 6 are used, according to known techniques.

When a bale 7 with the required diameter has been formed, the feeding of new material to the chamber 4 is interrupted, but the bale 7 continues to rotate. The feeding of sheet material to cover at least the cylindrical outer surface 12 then takes places, and the covering sheet may be netting, or plastics film. By way of example only, it will be assumed that the sheet material takes the form of plastics film 8, supplied from a supply reel 25.

In addition to compression/transport rollers 5, there are further rollers arranged adjacent to the outer circumference of the bale, and in particular rollers 5a and 5b, which define a feeding aperture 9 therebetween. The upper roller 5a is engaged by the apron belts 6, as shown, and forms a return end for the continuous movement of the belts around the outer periphery of the bale as it is being formed. However, the lower roller 5b is not engaged by the apron belts 6, and therefore it is possible to define a feeding aperture 9 between rollers 5a and 5b, through which the film 8 can be introduced, when it is required to apply a covering layer to the outer surface of the bale.

A feeder device 13 is provided, in order to feed and guide the delivery of the film 8 from the supply reel 25 to the outer surface 12 of the bale 7 and or roller 5a/b. The device 13, in the illustrated arrangement, is pivotally mounted, and is shown in full lines in a withdrawn/inactive position, and is shown in dashed outline in its feeding position, which it takes up after pivoting through approximately 90° about an upper horizontal pivot 13b. Figure 3 shows the feeder device 13 in the withdrawn position, whereas Figure 4 shows it in its feeding position. The device 13 comprises two plates 14 interconnected by a transverse bar 15, and which extend throughout the width of the bale chamber 4, measured along the axis of rotation of the bale 7.

The feeder device 13 has a feeding mouth 11, through which the film 8 is taken in order to engage with the outer surface 12 of the bale 7, after passing through the feeding aperture 9 defined between rollers 5a and 5b. The feeding mouth 11 essentially comprises a pair of cooperating elastomeric lips, of which upper lip 16a is connected to a screen 17 connected to the lower end of the forward one of the pair of metal plates 14, whereas lower lip16b is connected to transversely extending edge bar 18. The lips 16a, 16b extend throughout the full axial extent of the bale, and conveniently are made of rubber reinforced by textile material in web form. By such an arrangement, the lips 16a, 16b have a specific stable shape, but are resiliently deformable from the defined shape under load. The upper lip 16a has a lower engaging surface 16d, engaging with the upper surface 8a of film 8, and surface 16d is roughly textured, for example by perforation, or provision of blister pads, to provide firm gripping engagement, but prevent adhesion between the film and the lip. As an alternative, a silicone layer may be provided on the facing surface 16d.

Adjacent to the lips 16a and 16b, there are arranged two cooperating rollers 19 and 20, whose axes of rotation extend generally parallel to the axis of rotation of bale 7. The lower roller 20 is provided with a freewheel, which allows roller 20 to rotate only in the direction of the arrow 21, but prevents any rotation in a reverse direction. By contrast, the upper roller 19 is freely rotatable in either direction. However, roller 19 could also be provided with a freewheel, if required. The outer surface of the roller 20, provided with a freewheel, has a rough outer surface. The surface roughness/texture could be created by providing a sheet or film, for example a rubber film layer 20a. The opposed upper roller 19 is pivotally mounted on a support arm 22 which is rotatable about a horizontal pivot 23. A spring 24, mounted on screen 17, presses the upper roller 19 downwardly against the roller 20. The rollers 19 and 20 therefore are engaged firmly with each other, and are therefore able to hold the film 8 safely and reliably between them.

In Figure 3, the feeder device 13 is shown in the withdrawn position. The film 8 is pulled through and led between the rollers 19 and 20, and also remains held between the lips 16a, 16b, leaving a freely hanging leading end or "tail" 26. While the feeder device 13 is in the withdrawn position of Figure 3, the bale 17 continues to be formed, and during this time the rollers 5a and 5b rotate clockwise, as shown by the arrows. As soon as the bale 7 has reached a required diameter, which is adjustable, the picking up of crop material and supply to the chamber 4 is stopped. However, the bale 7 continues to be rotated.

The feeder device 13 is now pivoted downwardly in an anticlockwise direction about upper pivot 13b, under the operation of an actuator 13a which is connected to device 13 pivotally via pivot mounting 27. The device 13 moves to the feeding position shown in Figure 4, and in which the film 8 remains held firmly between the rollers 19 and 20, and with the leading end or tail 26 projecting forwardly therefrom, and into the feed gap 9 defined between rollers 5a and 5b. The film 8 is then capable of being safely firmly unwound from supply reel 25, and comes into contact with the material of the bale 7 on its outer surface 12 and or rollers 5a/b. To support to unrolling of the reel while moving to the feeding position the tensioning or stretching device could temporary (partly) be disengaged. The film 8 is arranged to be "tacky" on its contacting face, so that the film end 26 is able to adhere to the winding surface 12 of the bale 7, and is carried along with the bale in an anticlockwise direction shown by arrow 28. This is also assisted by the clockwise rotation of the lower roller 5b, which it also engages. As soon as the leading end 26 of the film 8 is securely engaging and moving with the cylindrical outer surface 12 of the bale 7, the feeder device 13 can then pivot back partly in the direction of its withdrawn position of Figure 3, to take up an intermediate position shown in Figure 5. The withdrawing is not causing extra force on the actuator since the tensioning force of the film is not added to the pulling back force. In the position of Figure 5, successive windings of covering layer can be applied to the surface 12 of the bale 7, by continued withdrawal of film 8 from the reel 25. When the required numbers of windings have been applied, the actuator 13a is operated to move the feeder device 13 back still further to the position shown in Figure 6. This then allows a cutting mechanism to be operated, in order to cut the length of film 8 which runs between the feeding mouth (lips 16a and 16b) and the outer surface of the bale 7, thereby to form a new leading end 26 of film 8. The cutting mechanism comprises a rotating cutter roll 29 having radially projecting cutting pins 31 or cutting knife. Rotation of roll 29 through about 90° causes the pins 31 to penetrate the film 8 and tear it apart. During this operation, the rollers 19 and 20 safely hold the newly formed film end 26, of which a forward end hangs freely from the mouth 11 defined by lips 16a and 16b.

The film 8 has a width which corresponds at least to the entire width of the machine i.e. extends axially throughout the length at least of the bale 7 measured along its axis, so that the film 8 can cover the entire cylindrical outer surface 12. This is possible because of the full amount of free space made available in the design of the baler, and because also of the arrangement of the rollers 5.

The screen 17 also extends throughout the full length of the feeder device 13. During feeding of film 8 onto the outer surface of the bale, it forms a shield over the exposed upper surface of the film 8 and rollers 19 and 20, and is therefore able to catch any dust which is inevitably present, and which might otherwise fall onto the surface of the film. When the feeder device 13 reverses to its withdrawn or inactive position, any dust which has been collected falls off, and therefore there is a self-cleaning function during each operating cycle.

It should be understood that the pivotable mounting of the feeding device 13, in the illustrated embodiment, is one mode of mounting only. It is within the scope of the invention for the feeder device to be mounted so as to be capable of movement such that the feeder mouth 11 moves along a linear path, both forward and reverse. Regardless of the way in which the feeder device 13 is mounted, the functional features performed by the rollers 19 and 20, and the flexible lips 16a, 16b, and also the cutting rotor 29, are able to perform with all the same technical advantages.

The illustrated embodiment of feeder device 13 therefore has a feeder mouth 11 which is mounted on a support (14, 15, 17), and means 13b is provided to mount the support 14, 15, 17 on the device 13 for movement between an inoperative withdrawn position (in which the feeder mouth 11 is spaced from the outer surface 12 of the bale 7 and with a leading end 26 of the sheet 8 projecting from the feeder mouth 11), and a feeding position in which the feeder mouth 11 is adjacent to the outer surface 12 of the bale 7 so that the leading end 26 of the sheet 8 can engage with the outer surface 12 of the bale 7. and or rollers 5a/b.

There is also a pair of roller 19, 20 mounted on the support 14, 15, 17 and located along the path of travel of the sheet 8 from the supply 25 to the feeder mouth 11, so as to be engageable with opposed faces of the sheet 8 and thereby hold the leading end 26 of the sheet 8 when the support 14, 15, 17 is in its inoperative withdrawn position, and also as it moves to its feeding position. Further, the holding action of the roller 19, 20 is capable of being overcome upon engagement of the sheet 8 with the outer surface 12 of the bale 7 and consequent pulling force being exerted upon the sheet 8.

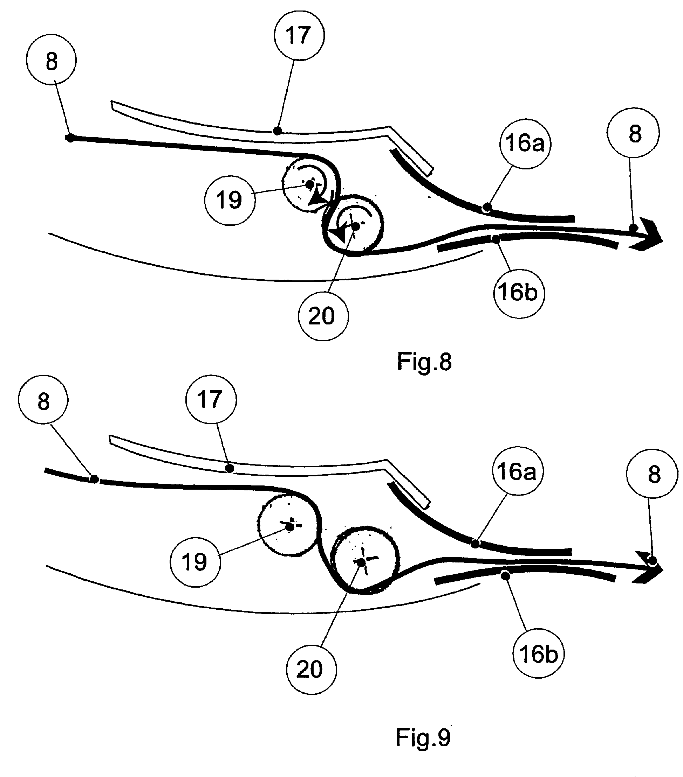

Referring now to Figures 8 to 11, parts corresponding with those already described have been given the same reference numerals. The successive Figures show minor variation to the arrangement of the feed/hold rollers 19,20, in further preferred embodiments of the invention. The arrangement of the flexible lips 16a, 16b in feeder mouth 11 are also illustrated.

In the embodiment of Figure 8, the rollers 19, 20 are shown in close proximity to each other, and with the sheet (film) 8 being fed in a sinuous manner engaging part of the outer periphery of clockwise rotating roller 19, and a part of the periphery of roller 20 which rotates in an anticlockwise direction. It will be noted that the axis of rotation of roller 20 is located downstream of the axis of roller 19, with respect to the path of travel of the film 8 through the feeder device. This to have more grip on the film/net without excessive pressing forces of the rollers onto each other, by the long contact surface between film and rollers,

The embodiment of Figure 9 shows an alternative arrangement, in which rollers 19 and 20 do not contact each other, but there is a small gap therebetween. As to abandon fully the pressing force between the roller, which may therefore be designed lighter. However, the path of travel of the film 8 is generally similar. For the good grip.

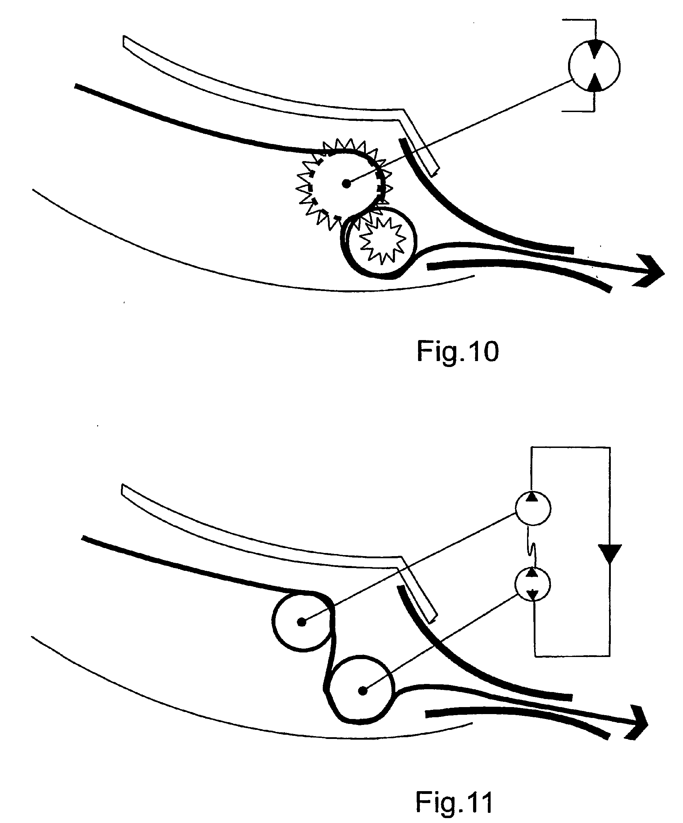

The embodiment of Figure 10 shows rollers 190 and 200, arranged closely adjacent to each other, similar to the embodiment of Figure9, and similar path of travel of the film 8. However, there is a gear drive connection between the rollers 190 and 200, with roller 200 rotating at a higher peripheral speed, so as to apply a pre-stretching action to the film 8, prior to issue from the feeding mouth 11 and wrapping around the outer surface of the bale. A convenient peripheral speed ratio between rollers 190 and 200 is 1:1.6. Hydraulic drive maybe applied to the roller 190 or 200 as to lower the pulling off force on the film by the bale, and then the gear drive from roller 190 to roller 200 applies the required speed multiplication to the roller 200.

Figure 11 shows an arrangement similar to that of Figure 9 i.e. the rollers 19 and 20 have their axes of rotation spaced apart with respect to the general path of travel of the film 8 through the feeding device, but in this embodiment each of the rollers 19, 20 is driven by its own motor, which can be an electric motor or hydraulic motor. The drive arrangement is such that the peripheral speed of roller 20 is faster than the peripheral speed of roller 19, again preferably in a ratio of 1:1.6, in order to act as a pre-stretcher mechanism and or can support to lower the pulling force on the film by the bale.

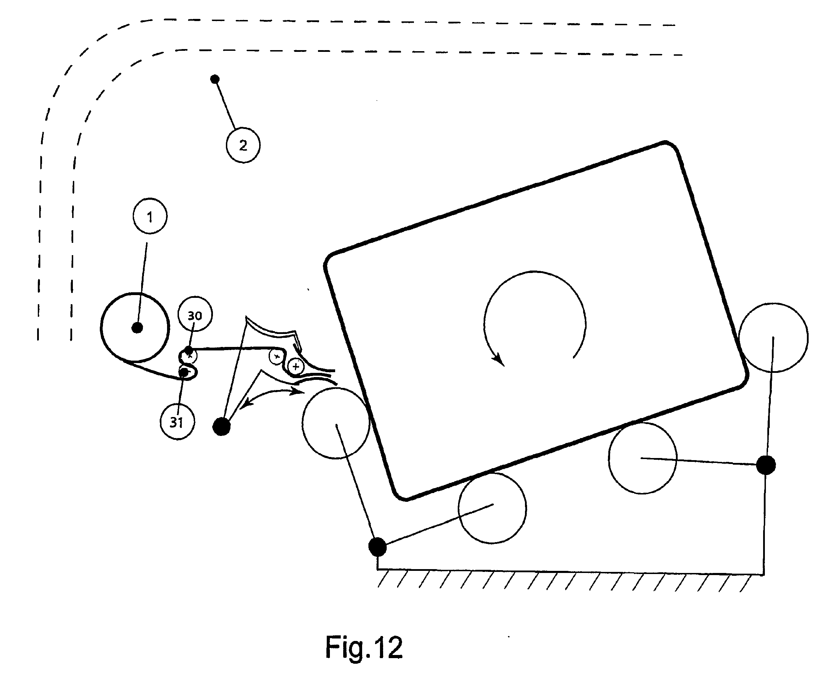

Figure 12 shows application of a feeder device according to the invention, in combination with a bale handling apparatus which is used to support and to rotate a bale of rectangular cross-section (paralellopiped) shape. The bale handling apparatus is shown schematically only, and may be a set of four support rollers of the type provided in a bale wrapper apparatus for applying stretch film to the outer periphery of a rectangular cross-section bale.

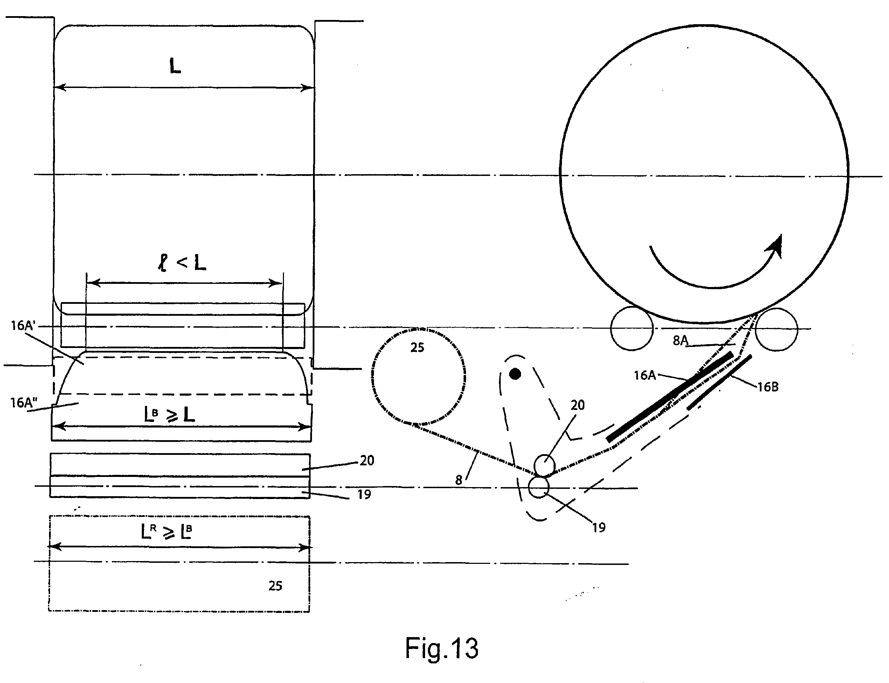

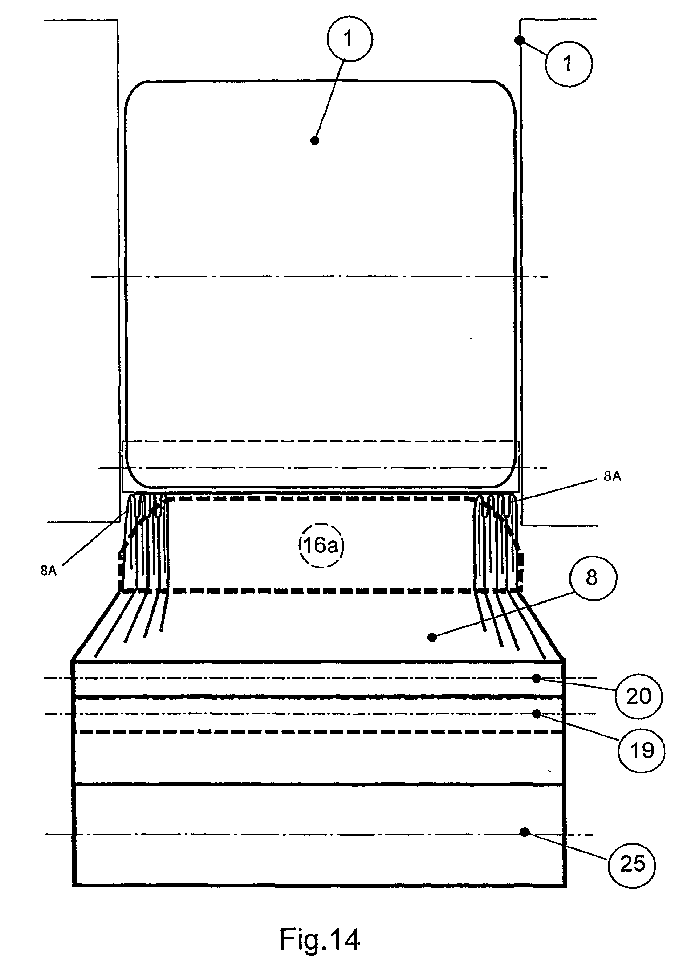

Figures 13 and 14 show schematically, in side view and plan view respectively, the relative width of a sheet of film being applied to the outer surface of a cylindrical bale, relative to the axial extent of the bale which is being covered. The entire cylindrical surface of the bale can be covered, and when the sheet being supplied has a greater width than the axial extent of the bale, it is possible for the sheet covering also to overlap the circular edges at each end of the bale, and partly to overlie a circumferential region of the circular end faces of the bale.
Figure 13 right hand shows a feeder device in a somewhat retracted position as described erarlier. The film 8 is running over an angle over a non-flexible lip 16A and the edges of the film/net are short cutting (8A) this angle. Because the leading end 16A' of lip 16A is smaller as the width of the film and the base width, to which the leading end is extending, the film/net is upsetting, curling the net/film towards the sides, which upset/curled up film/net is put just on the edge of the cylindrical side of the bale.

## Claims

1. A feeder device (13) for covering the outer surface 12 of an agricultural bale (7) with a covering sheet (8), said bale being rotatable about its axis in order to pull the sheet (8) from a supply of sheet material (25) via the feeder device (13) and so that the sheet (8) can form at least one covering layer on the outer surface (12) of the bale (7), in which the feeder device (13) comprises:
a feeder mouth (11) through which the sheet (8) can pass as it is withdrawn from the supply (25) to cover the outer surface (12) of the bale (7);
a movable support (14, 15, 17) on which the feeder mouth (11) is mounted; and
means (13b) mounting the support (14, 15, 17) on the device (13) for movement between an inoperative withdrawn position in which the feeder mouth (11) is spaced from the outer surface (12) of the hale (7) and with a leading end (26) of the sheet (8) projecting from the feeder mouth (11), and a feeding position in which the feeder mouth (11) is adjacent to the outer surface (12) of the bale (7) so that the leading end (26) of the sheet (8) can engage with the outer surface (12) of the bale (7);
**characterised by** a pair of rollers (19, 20) mounted on the support (14, 15, 17) and located along the path of travel of the sheet (8) from the supply (25) to the feeder mouth (11), and so as to be engageable with opposed faces of the sheet (8) and thereby bold the leading end (26) of the sheet (8) when the support (14, 15, 17) is in its inoperative withdrawn position and as it moves to its feeding position, and in which the holding action of the rollers (19, 20) is capable of being overcome upon engagement of the sheet (8) with the outer surface (12) of the rotating bale (7) and consequent pulling force being exerted on the sheet (8).

2. A feeder device according to claim 1, in which at least one of the rollers (19, 20) is a freewheel roller (20).

3. A feeder device according to claim 1 or 2, in which one of the rollers (19) is compression roller,

4. A feeder device according to claim 2, in which the freewheel roller (20) is rotatable in one direction when the covering sheet (8) is withdrawn from the supply (25) by the rotation of the bale (7), and in which the freewheel roller (2) is blocked against rotation in a reverse direction.

5. A feeder device according to claim 2 or claim 4, in which the outer surface of the freewheel roller (20) is roughened or textured to engage the facing surface of the sheet 8.

6. A feeder device according to claim 2 or claim 4, in which the outer surface of the freewheel roller (20) is formed by an elastomeric coating, film or sheet (21).

7. A feeder device according to claim 3, in which the compression roller (19) is spring-pressed in a direction toward the other roller (20).

8. A feeder device according to claim 3 or claim 7, in which the compression roller (19) is a freely rotatable roller.

9. A feeder device according to claim 1, in which the rollers (19, 20) have relative peripheral speeds such that a pre-stretching action is applicable to the sheet (8), prior to application of the sheet (8) to the outer surface (12) of the bale (7).

10. A feeder device according to claim 9, in which the rollers (19, 20) are coupled drivingly to each other by gear wheels such that the downstream roller (20) is rotated at a higher speed than the upstream roller (19).

11. A feeder device according to claim 10, in which the gear ratio between the rollers (19, 20) is about 1 : 1.6.

12. A feeder device according to claim 1, in which the rollers (19, 20) are connected to a third roller by gears, preferably in a ratio of 1 : 1.6.

13. A feeder device according to claim 1, in which the rollers (19, 20) are preceded by a pair of pre-stretch rollers 30/31 which are capable of applying a pre-stretching action to the sheet (8) after it leaves the supply (25).

14. A feeder device according to claim 13, in which the pre-stretch rollers 30/31 are fixedly connected to the feed device (13).

15. A feeder device according to claim 13, in which the pre-stretch rollers 30/31 are fixedly connected to a holder of a reel supply (25) of sheet (8).

16. A feeder device according to any one of claims 9 to 15, in which the pre-stretch rollers are power driven.

17. A feeder device according to claim 16, in which the power-driven rollers support the withdrawal force applied to the sheet (8) by the rotating bale (7).

18. A feeder device according to any one of claims 1 to 17, in which the rollers (19, 20) are greater in length than the axial extent of the bale.

19. A feeder device according to any one of the preceding claims, in which a cutting device (29) is arranged along the path of travel of the feeding mouth (11), and is provided over its full length with cutting parts, said cutting rotor being operative to cut the sheet (8) when wrapping has been completed.

20. A feeder device according to any one of the preceding claims, in which the feeding mouth (11) is displaceable along an arc of travel, or along a linear path, between the inoperative position and the feeding position.

21. A feeder device according to any one of the preceding claims, including a supply reel (26) of covering film (8) which is provided with a tacky surface to engage the outer surface of the bale and any underlying windings of film on the bale.

22. A feeder device according to any one of the preceding claims, in which a screen (17) is provided on the feeding mouth (11) to shield the sheet (8) as it passes through the feeding mouth, and prevent dust and other particles falling on the upper surface of the sheet.

23. A feeder device according to claim 1, in which at least one of the flexible lip (16a, 16b) is arranged in the feeder mouth (11) so as to be engageable deformably with the outer surface (12) of the bale (7) in order to guide the leading end (26) of the sheet into engagement with the outer surface (12) of the bale (7).

24. A feeder device according to any one of the preceding claims, and adapted to be mounted on a bale-handling apparatus, to apply a sheet (8) to the outer surface (12) of a bale (7) rotated by said apparatus.

25. A feeder device according to claim 24, in which the bale-handling apparatus is a baler, or a bale wrapper.

26. A feeder device according to claim 25, in which the baler is a round baler.

27. A feeder device according to any one of claims 1 to 23, in which the device 13 is operative to apply a sheet (8) to the cylindrical outer surface 12 of a cylindrical bale (7).

28. A feeder device according to claims 1 to 23, in which the device 13 is operative to apply a sheet to the outer surface 1 of a bale of rectangular cross-section.

## Patentansprüche

1. Zuführeinrichtung (13) zum Überziehen der Außenfläche (12) eines landwirtschaftlichen Ballens (7) mit einer Überzugsfolie (8), wobei der genannte Ballen um seine Achse drehbar ist, um die Folie (8) über die Zuführeinrichtung (13) von einem Folienmaterialvorrat (25) abzuziehen und damit die Folie (8) wenigstens eine Deckschicht auf der Außenfläche (12) des Ballens (7) bilden kann, wobei die Zuführeinrichtung (13) Folgendes aufweist:
eine Zuführöffnung (11), durch welche die Folie (8) hindurchlaufen kann, während sie vom Vorrat (25) abgezogen wird, um die Außenfläche (12) des Ballens (7) zu überziehen,
einen beweglichen Träger (14, 15, 17), an dem die Zuführöffnung (11) montiert ist, und
Mittel (13b) zum Befestigen des Trägers (14, 15, 17) an der Einrichtung (13) zur Bewegung zwischen einer nicht betriebsbereiten zurückgezogenen Stellung, in welcher die Zuführöffnung (11) von der Außenfläche (12) des Ballens (7) beabstandet ist und wobei ein vorderes Ende (26) der Folie (8) aus der Zuführöffnung (11) herausragt, und einer Zuführstellung, in welcher die Zuführöffnung (11) an die Außenfläche (12) des Ballens (7) angrenzt, so dass das vordere Ende (26) der Folie (8) an der Außenfläche (12) des Ballens (7) angreifen kann,
**gekennzeichnet durch** ein Paar Rollen (19, 20), die an dem Träger (14, 15, 17) montiert sind und sich am Bewegungsweg der Bahn (8) vom Vorrat (25) bis zur Zuführöffnung (11) entlang befinden, um mit entgegengesetzten Seitenflächen der Folie (8) in Eingriff zu kommen und **dadurch** das vordere Ende (26) der Folie (8) festzuhalten, wenn der Träger (14, 15, 17) in seiner nicht betriebsbereiten zurückgezogenen Stellung ist und während er sich in seine Zuführstellung bewegt, und wobei die Festhaltewirkung der Rollen (19, 20) bei Angreifen der Folie (8) an der Außenfläche (12) des rotierenden Ballens (7) und nachfolgender auf die Folie (8) ausgeübter Zugkraft überwunden werden kann.

2. Zuführeinrichtung nach Anspruch 1, wobei wenigstens eine der Rollen (19, 20) eine Freilaufrolle (20) ist.

3. Zuführeinrichtung nach Anspruch 1 oder 2, wobei eine der Rollen (19) eine Andruckrolle ist.

4. Zuführeinrichtung nach Anspruch 2, wobei die Freilaufrolle (20) in einer Richtung drehbar ist, wenn die Überzugsfolie (8) durch die Drehung des Ballens (7) vom Vorrat (25) abgezogen wird, und wobei die Freilaufrolle (2) in einer Rückwärtsrichtung gegen Drehung gesperrt ist.

5. Zuführeinrichtung nach Anspruch 2 oder Anspruch 4, wobei die Außenfläche der Freilaufrolle (20) geraut oder strukturiert ist, um an der ihr zugekehrten Oberfläche der Folie (8) anzugreifen.

6. Zuführeinrichtung nach Anspruch 2 oder Anspruch 4, wobei die Außenfläche der Freilaufrolle (20) von einer/einem elastomeren Beschichtung, Film oder Folie (21) gebildet wird.

7. Zuführeinrichtung nach Anspruch 3, wobei die Andruckrolle (19) durch Federdruck in Richtung auf die andere Rolle (20) gedrückt wird.

8. Zuführeinrichtung nach Anspruch 3 oder Anspruch 7, wobei die Andruckrolle (19) eine frei drehbare Rolle ist.

9. Zuführeinrichtung nach Anspruch 1, wobei die Rollen (19, 20) relative Umfangsgeschwindigkeiten haben, so dass eine Vordehnungswirkung auf die Folie (8) ausgeübt werden kann, bevor die Folie (8) auf die Außenfläche (12) des Ballens (7) aufgebracht wird.

10. Zuführeinrichtung nach Anspruch 9, wobei die Rollen (19, 20) durch Zahnräder antreibend miteinander gekoppelt sind, so dass die nachgelagerte Rolle (20) mit einer höheren Geschwindigkeit gedreht wird als die vorgelagerte Rolle (19).

11. Zuführeinrichtung nach Anspruch 10, wobei das Übersetzungsverhältnis zwischen den Rollen (19, 20) etwa 1:1,6 beträgt.

12. Zuführeinrichtung nach Anspruch 1, wobei die Rollen (19, 20) durch Zahnräder, vorzugsweise im Verhältnis von 1:1,6, mit einer dritten Rolle verbunden sind.

13. Zuführeinrichtung nach Anspruch 1, wobei den Rollen (19, 20) ein Paar Vordehnungsrollen (30, 31) vorgelagert ist, die eine Vordehnungswirkung auf die Folie (8) ausüben können, nachdem sie den Vorrat (25) verlassen hat.

14. Zuführeinrichtung nach Anspruch 13, wobei die Vordehnungsrollen (30, 31) mit der Zuführvorrichtung (13) festverbunden sind.

15. Zuführeinrichtung nach Anspruch 13, wobei die Vordehnungsrollen (30, 3 1) mit einem Halter eines Rollenvorrats (25) von Folie (8) festverbunden sind.

16. Zuführeinrichtung nach einem der Ansprüche 9 bis 15, wobei die Vordehnungsrollen motorisch betrieben sind.

17. Zuführeinrichtung nach Anspruch 16, wobei die motorisch betriebenen Vordehnungsrollen die vom rotierenden Ballen (7) auf die Folie (8) ausgeübte Abziehkraft unterstützen.

18. Zuführeinrichtung nach einem der Ansprüche 1 bis 17, wobei die Rollen (19, 20) eine größere Länge als die axiale Ausdehnung des Ballens haben.

19. Zuführeinrichtung nach einem der vorhergehenden Ansprüche, wobei eine Schneidvorrichtung (29) an dem Bewegungsweg der Zuführöffnung (11) entlang angeordnet ist und auf ihrer gesamten Länge mit Schneidteilen versehen ist, wobei der genannte Schneidrotor die Aufgabe hat, die Folie (8) durchzuschneiden, wenn die Umhüllung abgeschlossen ist.

20. Zuführeinrichtung nach einem der vorhergehenden Ansprüche, wobei die Zuführöffnung (11) an einem Bewegungsbogen entlang oder an einem linearen Weg entlang zwischen der nicht betriebsbereiten Stellung und der Zuführstellung verschiebbar ist.

21. Zuführeinrichtung nach einem der vorhergehenden Ansprüche, die eine Vorratsrolle (26) von Überzugsfolie (8) beinhaltet, die mit einer klebrigen Oberfläche versehen ist, um an der Außenfläche des Ballens und an unter ihr liegenden Folienwicklungen auf dem Ballen anzugreifen.

22. Zuführeinrichtung nach einem der vorhergehenden Ansprüche, wobei an der Zuführöffnung (11) eine Abschirmung (17) bereitgestellt ist, um die Folie (8) beim Durchlaufen der Zuführöffnung zu schützen, um zu verhindern, dass Staub und andere Teilchen auf die obere Oberfläche der Folie fallen.

23. Zuführeinrichtung nach Anspruch 1, wobei wenigstens eine der biegsamen Lippen (16a, 16b) in der Zuführöffnung (11) angeordnet ist, um verformbar an der Außenfläche (12) des Ballens (7) in Anlage zu kommen, um das vordere Ende (26) der Folie in Angriff an der Außenfläche (12) des Ballens (7) zu führen.

24. Zuführeinrichtung nach einem der vorhergehenden Ansprüche und ausgeführt, um an einer Ballenhandhabungsvorrichtung montiert zu werden, um eine Folie (8) auf die Außenfläche (12) eines von der genannten Vorrichtung gedrehten Ballens (7) aufzubringen.

25. Zuführeinrichtung nach Anspruch 24, wobei die Ballenhandhabungsvorrichtung eine Ballenpresse oder eine Ballenwickelvorrichtung ist.

26. Zuführeinrichtung nach Anspruch 25, wobei die Ballenpresse eine Rundballenpresse ist.

27. Zuführeinrichtung nach einem der Ansprüche 1 bis 23, wobei die Vorrichtung (13) die Aufgabe hat, eine Folie (8) auf die zylindrische Außenfläche (12) eines zylindrischen Ballens (7) aufzubringen.

28. Zuführeinrichtung nach einem der Ansprüche 1 bis 23, wobei die Vorrichtung (13) die Aufgabe hat, eine Folie auf die Außenfläche (1) eines Ballens mit rechteckigem Querschnitt aufzubringen.

## Revendications

1. Dispositif d'alimentation (13) permettant de recouvrir la surface extérieure (12) d'une botte agricole (7) avec un film de protection (8), ladite botte pouvant entrer en rotation autour de son axe afin de tirer le film (8) d'une réserve de film (25) par l'intermédiaire du dispositif d'alimentation (13) et de telle sorte que le film (8) peut former au moins une couche de protection sur la surface extérieure (12) de la botte (7), dans lequel le dispositif d'alimentation (13) comprend :
une ouverture d'alimentation (11) par laquelle le film (8) peut passer lorsqu'il est retiré de la réserve (25) afin de recouvrir la surface extérieure (12) de la botte (7) ;
un support amovible (14, 15, 17) sur lequel l'ouverture d'alimentation (11) est installée ; et
un moyen (13b) d'installer le support (14, 15, 17) sur le dispositif (13) pour permettre le déplacement entre une position en retrait au repos, dans laquelle l'ouverture d'alimentation (11) est espacée de la surface extérieure (12) de la botte (7), et une amorce (26) du film (8) dépasse de l'ouverture d'alimentation (11), et une position d'alimentation, dans laquelle l'ouverture d'alimentation (11) est adjacente à la surface extérieure (12) de la botte (7) de telle sorte que l'amorce (26) du film (8) peut entrer en engagement avec la surface extérieure (12) de la botte (7) ;
**caractérisé par** une paire de rouleaux (19, 20) installés sur le support (14, 15, 17), situés sur le chemin de déplacement du film (8) entre la réserve (25) et l'ouverture d'alimentation (11), et pouvant entrer en engagement avec des faces opposées du film (8) et ainsi maintenir l'amorce (26) du film (8) lorsque le support (14, 15, 17) se trouve dans sa position en retrait au repos et lorsqu'il se déplace dans sa position d'alimentation, et en ce que l'action de maintien des rouleaux (19, 20) peut être annulée lorsque le film (8) entre en engagement avec la surface extérieure (12) de la botte en rotation (7) et qu'un effort de traction est ensuite exercé sur le film (8).

2. Dispositif d'alimentation selon la revendication 1, dans lequel au moins un des rouleaux (19, 20) est un rouleau à roue libre (20).

3. Dispositif d'alimentation selon la revendication 1 ou 2, dans lequel l'un des rouleaux (19) est un rouleau compresseur.

4. Dispositif d'alimentation selon la revendication 2, dans lequel le rouleau à roue libre (20) peut entrer en rotation dans un sens lorsque le film de protection (8) est retiré de la réserve (25) par la rotation de la botte (7), et dans lequel la rotation du rouleau à roue libre (2) est bloquée dans un sens inverse.

5. Dispositif d'alimentation selon la revendication 2 ou 4, dans lequel la surface extérieure du rouleau à roue libre (20) est rugueuse ou texturée pour entrer en engagement avec la surface opposée du film (8).

6. Dispositif d'alimentation selon la revendication 2 ou 4, dans lequel la surface extérieure du rouleau à roue libre (20) est formée d'un revêtement, d'une couche ou d'un film élastomère (21).

7. Dispositif d'alimentation selon la revendication 3, dans lequel le rouleau compresseur (19) est pressé par des ressorts en direction de l'autre rouleau (20).

8. Dispositif d'alimentation selon la revendication 3 ou 7, dans lequel le rouleau compresseur (19) est un rouleau pouvant entrer en rotation libre.

9. Dispositif d'alimentation selon la revendication 1, dans lequel les rouleaux (19, 20) présentent des vitesses périphériques relatives de telle sorte qu'une action de pré-étirage peut être appliquée au film (8) avant l'application du film (8) sur la surface extérieure (12) de la botte (7).

10. Dispositif d'alimentation selon la revendication 9, dans lequel les rouleaux (19, 20) sont couplés en entraînement l'un avec l'autre par des roues dentées, de telle sorte que le rouleau en aval (20) présente une vitesse de rotation plus élevée que le rouleau en amont (19).

11. Dispositif d'alimentation selon la revendication 10, dans lequel le rapport de transmission des rouleaux (19, 20) est d'environ 1:1,6.

12. Dispositif d'alimentation selon la revendication 1, dans lequel les rouleaux (19, 20) sont reliés à un troisième rouleau par des engrenages, de préférence dans un rapport de 1:1,6.

13. Dispositif d'alimentation selon la revendication 1, dans lequel les rouleaux (19, 20) sont précédés par une paire de rouleaux de pré-étirage (30, 31), pouvant appliquer une action de pré-étirage sur le film (8) après que celui-ci soit sorti de la réserve (25).

14. Dispositif d'alimentation selon la revendication 13, dans lequel les rouleaux de pré-étirage (30, 31) sont reliés de manière fixe au dispositif d'alimentation (13).

15. Dispositif d'alimentation selon la revendication 13, dans lequel les rouleaux de pré-étirage (30, 31) sont reliés de manière fixe à un porte-bobine (25) de film (8).

16. Dispositif d'alimentation selon l'une quelconque des revendications 9 à 15, dans lequel les rouleaux de pré-étirage sont entraînés par un moteur.

17. Dispositif d'alimentation selon la revendication 16, dans lequel les rouleaux entraînés par moteur soutiennent la force de retrait appliquée au film (8) par la botte en rotation (7).

18. Dispositif d'alimentation selon l'une quelconque des revendications 1 à 17, dans lequel la longueur des rouleaux (19, 20) est supérieure à l'étendue axiale de la botte.

19. Dispositif d'alimentation selon l'une quelconque des revendications précédentes, dans lequel un dispositif de découpe (29) est disposé le long du chemin de déplacement de l'ouverture d'alimentation (11), et est muni, sur toute sa longueur, de pièces de découpe, ledit rotor de découpe servant à découper le film (8) une fois l'emballage terminé.

20. Dispositif d'alimentation selon l'une quelconque des revendications précédentes, dans lequel l'ouverture d'alimentation (11) peut être déplacée le long d'un arc de déplacement ou d'un chemin linéaire, entre la position au repos et la position d'alimentation.

21. Dispositif d'alimentation selon l'une quelconque des revendications précédentes, comprenant une bobine d'alimentation (26) de film de protection (8), munie d'une surface collante permettant de faire entrer en engagement la surface extérieure de la botte et tout bobinage de film sous-jacent sur la botte.

22. Dispositif d'alimentation selon l'une quelconque des revendications précédentes, dans lequel un panneau (17) est installé sur l'ouverture d'alimentation (11) pour protéger le film (8) lorsqu'il passe à travers l'ouverture d'alimentation, et empêcher que de la poussière et d'autres particules ne tombent sur la surface supérieure du film.

23. Dispositif d'alimentation selon la revendication 1, dans lequel au moins une lèvre souple (16a, 16b) est disposée dans l'ouverture d'alimentation (11) de manière à pouvoir entrer en engagement déformable avec la surface extérieure (12) de la botte (7), afin de guider l'amorce (26) du film pour qu'elle entre en engagement avec la surface extérieure (12) de la botte (7).

24. Dispositif d'alimentation selon l'une quelconque des revendications précédentes, pouvant être installé sur un appareil de manutention de bottes, afin d'appliquer un film (8) sur la surface extérieure (12) d'une botte (7) mise en rotation par ledit appareil.

25. Dispositif d'alimentation selon la revendication 24, dans lequel l'appareil de manutention de bottes est une botteleuse ou une lieuse.

26. Dispositif d'alimentation selon la revendication 25, dans lequel la botteleuse est une presse à bottes rondes.

27. Dispositif d'alimentation selon l'une quelconque des revendications 1 à 23, dans lequel le dispositif (13) peut appliquer un film (8) sur la surface extérieure cylindrique (12) d'une botte cylindrique (7).

28. Dispositif d'alimentation selon les revendications 1 à 23, dans lequel le dispositif (13) peut appliquer un film sur la surface extérieure (1) d'une botte rectangulaire.
